# EUROPÄISCHE PATENTSCHRIFT

(11) **EP 2 924 853 B1**
(45) Veröffentlichungstag und Bekanntmachung des Hinweises auf die Patenterteilung: **12.01.2022**
(21) Anmeldenummer: 14162023.7
(22) Anmeldetag: 27.03.2014
(51) Int. Cl.: H02K 7/04, H02K 15/16

(54) **Rotor mit Auswuchtnut**
Rotor with balancing groove
Rotor doté d'une rainure d'équilibrage

(43) Veröffentlichungstag der Anmeldung: 30.09.2015
(73) Patentinhaber: Siemens Aktiengesellschaft, 80333 München (DE)
(72) Erfinder: Streit, Dietmar, 97640 Oberstreu (DE); Kraus, Andreas, 97647 Sondheim (DE); Sterzinger, Melanie, 97638 Mellrichstadt - Bahra (DE); Martin, Jürgen, 93051 Regensburg (DE)

(56) Entgegenhaltungen:
- CH-A- 150 720
- FR-A1- 2 766 988
- JP-A- S57 193 954
- None

## Beschreibung

Die Erfindung betrifft einen Rotor einer rotatorischen dynamoelektrischen Maschine, der zumindest an einer Stirnseite zumindest eine umlaufende Nut aufweist. Die Erfindung betrifft ebenfalls eine rotatorische dynamoelektrische Maschine mit einem solchen Rotor und ein Verfahren zur Tarierung bzw. Wuchtung rotationssymmetrischer Teile, insbesondere Rotoren rotatorischer dynamoelektrischer Maschinen.

Rotatorische dynamoelektrische Maschinen weisen im Betriebsfall einen sich drehenden Rotor auf. Bei sich drehenden Teilen spielt ein Massenausgleich bzw. das Auswuchten eine entscheidende Rolle, um insbesondere die angestrebte Lebensdauer von Lagern zu gewährleisten.

So ist aus der DE 870 192 C eine Einrichtung zum Auswuchten von schnelllaufenden Wellen, insbesondere von Elektromotoren bekannt, wobei auf der auszuwuchtenden Welle mehrere radial symmetrisch verteilte Blechstreifen angebracht sind, von denen nach einem Auswuchtungsmesslauf der Unwucht entsprechende Stücke abgeschnitten werden.

Aus der US 7 687 968 B2 ist ein Generator bekannt, der an der Stirnseite einen Ausbalancierring aufweist, in den axial verschiedene Gewichte einsetzbar sind.

Aus der CH 150 720 A ist ein Rotor einer rotatorischen dynamoelektrischen Maschine, der zumindest an einer Stirnseite zumindest eine umlaufende in ihrem Querschnitt nach außen verjüngende Nut aufweist, in die eine oder mehrere Nuteinsätze einsetzbar und positionierbar sind.

Die FR 2 766 988 A1 betrifft eine Auswuchtvorrichtung für einen Rotor einer schnell rotierenden elektrischen Maschine, die betriebsbereit ist und einen Rotor und einen Stator umfasst, die in einer Karkasse angeordnet sind, die den Stator umgibt und trägt, mit Endflansche, die die Lager des Rotors tragen, wobei die Ausgleichsvorrichtung Gewichte zum Reduzieren der statischen und dynamischen Unwucht des Rotors umfasst, die auf dem Rotor angeordnet sind.

Aus der JP S57 193954 A wird zur Reduzierung des Geräusches einer elektrischen Hochgeschwindigkeits-Rotationsmaschine ein Auswuchten in Rotationsrichtung eines Rotors vorgeschlagen, um eine schnelle Änderung der Oberflächenform zu verringern. Dabei fixiert ein Unruhrad ein abschnittsweise sockelförmiges Ausgleichsgewicht, das in eine abschnittsweise sockelförmige Rezession eingreift, die entlang des äußeren Kreises in der Längsebene gegraben wurde.

Des Weiteren sind andere Wuchtmethoden bekannt, in dem z.B. ein Wuchtkitt an Stirnseiten von Rotoren platziert wird.

Die bekannten Lösungen sind vergleichsweise aufwändig und je nach Ausführung nicht zeitbeständig, dies gilt insbesondere für die Auswuchtung mit Wuchtkitt.

Ausgehend davon liegt der Erfindung die Aufgabe zugrunde einen Rotor zu schaffen, der sich in einfacher Art und Weise, kostengünstig auswuchten lässt. Des Weiteren soll auch ein Auswuchten des Rotors bei Vorliegen mehrerer Unwuchten ermöglicht werden.

Die Lösung der gestellten Aufgabe gelingt durch einen Rotor einer rotatorischen dynamoelektrischen Maschine mit den im Anspruch 1 angegeben Merkmalen. Der Rotor weist zumindest an einer Stirnseite eine umlaufende in ihrem Querschnitt nach außen verjüngende Nut auf, in die eine oder mehrere Nuteinsätze einsetzbar und positionierbar sind.

Erfindungsgemäß wird dabei nun in eine Nut, die an der Stirnseite des Rotors vorgesehen ist, und deren Querschnitt sich nach außen vom Rotor weg verjüngt, ein Nuteinsatz, insbesondere ein Normteil also z.B. ein Quergewindebolzen eingesetzt.

Vorzugsweise ist die Ausrichtung der Nut im Wesentlichen in axialer Richtung, es sind aber auch andere Ausrichtung der Nut unter einem vorgegebenen Winkel zur Drehachse möglich.

In Umfangsrichtung betrachtet ist der Nuteinsatz in dieser Nut an dieser Stirnseite des Rotors verschiebbar und an einer vorgegebenen, nahezu beliebiger Position befestigbar. Damit kann eine stufenlose Wuchtung eines Rotors oder eines anderen rotationssymmetrischen Teils erreicht werden.

Aufgrund der Formgestaltung des Querschnitts der Nut und des Nuteinsatzes ist ein Verschieben dieses Nuteinsatzes in der Nut einfach möglich. Der Nuteinsatz wird dabei über ein Nutfenster in die Nut eingesetzt.

Falls eine Positionierung eines Wuchtelements in diesem Teil - also dem Nutfenster - der Stirnseite notwendig sein sollte, kann dies folgendermaßen gelöst werden. In diesem Nutfenster wird ein Verschlussstopfen, eine Verschlussschraube oder ähnliches Element eingesetzt, das gleichzeitig als Wuchtgewicht ausgebildet ist.

Der Nuteinsatz in diesem Nutfenster kann aber auch durch eine Klebung befestigt werden.

Eine weitere Möglichkeit dieser Herausforderung zu begegnen besteht darin, dass zwei oder mehr Wuchtgewichte gleicher oder unterschiedlicher Form und/oder Gewicht vorgesehen sind, durch deren Einsatz in der Nut die gewünschte Wuchtung erreicht wird.

Das Befestigen des Nuteinsatzes in der Nut geschieht vorzugsweise durch das Einschrauben bzw. Anziehen eines Gewindestiftes in ein Gewinde des Nuteinsatzes. Der Nuteinsatz verklemmt sich dabei in der Nut. Als Nuteinsätze lassen sich vorzugsweise einfach herstellbare bzw. kostengünstige Normteile, wie z.B. Quergewindebolzen, Konusmuttern oder andere geometrisch einfach ausgeführte Bauteile wie Schiebe-, Gleit- und Gewindeplatten, verwenden, die sich in der konischen Nut verklemmen lassen.

Eine Klemmung oder Verkrallen der Nuteinsätze, die auch als Wuchtgewichte bezeichnet werden, sind nunmehr in der umlaufenden Nut fest positioniert und fixiert.

Durch zwei oder mehrere Nuteinsätze in einer oder mehreren Nuten des Rotors ist ein Feinwuchten dieses Rotors möglich. Dies gelingt beispielsweise durch das nahezu freie Verschieben der Nuteinsätze in der Nut und das anschließende - oben beschriebene - Fixieren.

Eine rotatorische dynamoelektrische Maschine mit einem derartig austarierten Rotor ist mit einem vergleichsweise ruhigen Lauf ausgestattet. Dies zeigt sich in einer vergleichsweise längeren Lebensdauer der Lager, die die Welle tragen, auf der der Rotor drehfest positioniert ist.

Die Lösung der gestellten Aufgabe gelingt auch durch ein Verfahren zur Tarierung/Wuchtung des Rotors einer dynamoelektrischen rotatorischen Maschine durch folgende Schritte:
- Betrieb der dynamoelektrischen Maschine,
- Erfassen der Unwucht bzw. der Unwuchten des Rotors,
- Festlegen der Art, Menge und Gewicht des Nuteinsatzes,
- Einsetzen des Nuteinsatzes in der nach außen verjüngenden Nut an zumindest einer Stirnseite des Rotors,
- Fixierung des Nuteinsatzes oder der Nuteinsätze in der Nut bzw. den Nuten mittels Gewindestifte.

Dabei wird die dynamoelektrische rotatorische Maschine in einem Messstand vermessen. Die auftretenden Unwuchten des Rotors werden durch Einsetzen von Nuteinsätzen, in unterschiedlicher Menge, Gewichten und geometrischer Abmessungen mit den angegebenen Schritten behoben. Dabei weist der Rotor an zumindest einer Stirnseite jeweils zumindest eine in Umfangsrichtung umlaufende Nut auf, in die die Nuteinsätze positioniert werden.

Die Erfindung sowie weitere vorteilhafte Ausgestaltungen der Erfindung sind den dargestellten Ausführungsbeispielen zu entnehmen. Dabei zeigen:
- FIG 1: eine prinzipiell dargestellte rotatorische elektrische Maschine mit einem Rotor,
- FIG 2 und FIG 3: einen Quergewindebolzen,
- FIG 4 bis FIG 6: geometrische Ausführungen des Quergewindebolzens,
- FIG 7: Quergewindebolzen in einer Nut,
- FIG 8: Einsetzen eines Quergewindebolzens in die Nut,
- FIG 9: Anordnung der Nut an der Rotorstirnseite,
- FIG 10: Konusmutter
- FIG 11: Konusmutter mit Gewindestift,
- FIG 12: prinzipieller Längsschnitt durch eine dynamoelektrische Maschine.

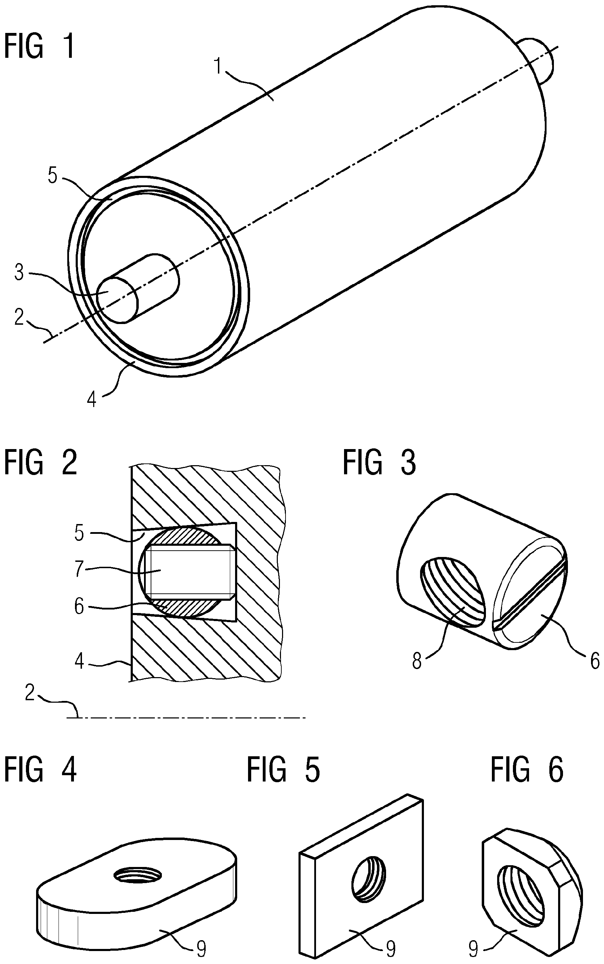

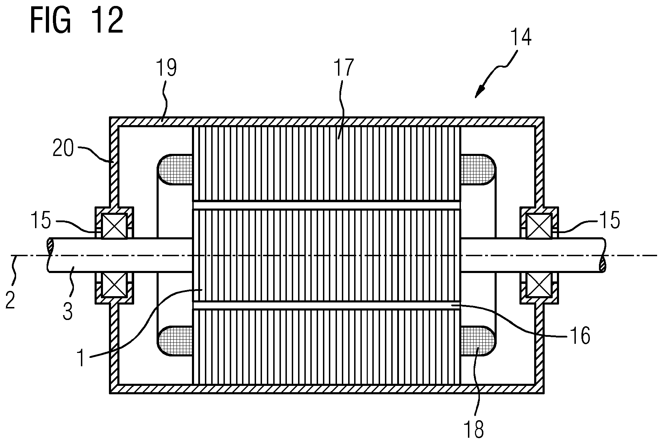

FIG 1 zeigt in perspektivischer Darstellung einen Rotor 1, als Teil einer in FIG 12 dargestellten dynamoelektrischen rotatorischen Maschine 14. Der Rotor 1 dreht sich im Betrieb dieser dynamoelektrischen rotatorischen Maschine 14 um eine Achse 2. Der Rotor 1 ist durch einen Luftspalt 16 von einem Stator 17 getrennt. Über diesen Luftspalt 16 erfolgt im Betrieb der dynamoelektrischen rotatorischen Maschine 14 eine elektromagnetische Wechselwirkung zwischen dem bestromten Wicklungssystem 18 des Stators 17 und dem Rotor 1, die zur Drehung der Welle 3 führt. Die dynamoelektrische rotatorische Maschine 14 ist in einem Gehäuse 19 angeordnet in dem auch lagerschilde 20 positioniert sind, die die Lager 15 halten.

Dabei stützt sich eine Welle 3 auf den Lagern 15 ab. Auf diese Welle 3 ist der Rotor 1 geschrumpft oder durch andere mechanische Mittel mit der Welle 3 drehfest verbunden. Um nunmehr die Belastung der Lager 15 aufgrund von Unwuchten, also z.B. unsymmetrischer Massenverteilung des Rotors 1 zu vermeiden oder zumindest zu reduzieren, wird der Rotor 1 erfindungsgemäß über seine an einer Stirnseite 4 angeordnete Nut 5 und mittels zumindest einem darin anzuordnenden Nuteinsatz, der beispielsweise als Quergewindebolzen 6 ausgebildet ist, ausgewuchtet.

Der Rotor 1 ist dabei nicht auf einen Maschinentyp beschränkt. Bei Asynchronmotoren mit Kurzschlussläufer kann die Nut 5 in dem Kurzschlussring vorgesehen werden. Bei anderen Maschinentypen z.B. permanenterregten Synchronmotoren sind ggf. eigene Scheiben in Form von Endblechen, die auch eine Paketierung des Blechpaket des Rotors 1 durch Zugbolzen ermöglichen, an den Stirnseiten des Rotors 1 anzubringen. Diese Endbleche oder Scheiben weisen dabei die Nut bzw. Nuten auf, in die die Nuteinsätze zu positionieren sind.

Eine derartige Nut 5 ist dabei zumindest an einer Stirnseite des Rotors 1 vorgesehen. Um zusätzliche Wuchtmöglichkeiten zu ermöglichen, ist an beiden Stirnseiten jeweils eine Nut vorgesehen und/oder es sind mehrere umlaufende Nuten auf einer Stirnseite des Rotors 1 vorhanden. In die Nut 5 wird dabei zumindest ein Quergewindebolzen 6 eingesetzt, der durch einen Gewindestift 7 positioniert wird.

Die Positionierung und Fixierung des Nuteinsatzes bzw. Quergewindebolzens 6 geschieht aufgrund einer Auswertung, die im Rahmen eines Wuchtungsverfahrens der dynamoelektrischen rotatorischen Maschine 14 vorgenommen wird. Dabei wird die elektrische Maschine vorzugsweise in einem Messstand betrieben. Durch ein geeignetes - an sich bekanntes - Messverfahren wird die Unwucht bzw. werden die Unwuchten des Rotors 1 ermittelt. Es werden die Anzahl als auch die Gewichte der Nuteinsätze bzw. der Quergewindebolzen 6 aufgrund der festgestellten Unwucht/-en ermittelt. Diese werden in die Nut bzw. Nuten eingesetzt und dort je nach Auswertung in einer vorbestimmten Position in der Nut fixiert.

FIG 2 zeigt in einem Ausschnitt die Nut 5, die axial nach außen leicht konisch geformt ist, so dass ein darin eingesetztes Quergewindebolzen 6 oder ein anderes Normteil, wie es z.B. FIG 4 bis FIG 6 zeigt, einsetzbar ist und in Umfangsrichtung in der Nut 5 leicht verschiebbar angeordnet ist. Ein axiales Einsetzen oder Entnehmen des Quergewindebolzens 6 ist nur über ein Nutfenster 10 möglich. Durch Einschrauben eines Gewindestiftes 7 in ein Gewinde 8 des Quergewindebolzens 6, wird der Quergewindebolzen 6 in der Nut 5 verklemmt oder verkrallt, indem der Quergewindebolzen 6 sich durch den Einschraubvorgang des Gewindestiftes 7 ausweitet. Dabei wird eine ortsgenaue Fixierung des Nuteinsatzes, also des Quergewindebolzens 6 in der Nut 5 erreicht. Erfindungsgemäß ist der Nuteinsatz - also das Wuchtgewicht - nahezu stufenlos positionierbar.

FIG 3 zeigt eine Ausführung eines Quergewindebolzens 6 mit seinem Gewinde für den Gewindestift 7. Der Quergewindebolzen 6 ist ein Normteil, in diesem Fall ein Zylinder mit einem quer angeordneten Gewinde 8.

Dabei ist die Fixierung des Quergewindebolzens 6, der letztlich ein Wuchtgewicht ist, in der Nut 5 von dem Nutfenster 10 abgesehen frei wählbar. Das Wuchtgewicht ist somit nicht auf gewisse vorpositionierte axial verlaufende Bohrungen an der Stirnseite des Rotors 1 angewiesen.

Durch das freie, stufenlose Verschieben von ein, zwei oder mehreren Nuteinsätzen in der Nut ist ein Feinwuchten des Rotors 1 möglich. Es können somit auch mehrere vorhandene Unwuchten des Rotors 1 ausgeglichen werden.

Als Quergewindebolzen 6 sind auch geometrisch andere Bauteile, wie z.B. Schiebe-, Gleitmuttern, Gewindeplatten etc. vorzusehen, wie dies beispielsweise in FIG 4, FIG 5 und FIG 6 dargestellt ist. Die Nut 5, also der Einstich, stellt eine Wuchtebene dar, die einfach und kostengünstig beispielsweise durch eine Drehbearbeitung hergestellt werden kann. Die Nut 5 kann dabei auch durch eine Fräsbearbeitung oder durch Halbzeuge, wie Strangpressprofile bereitgestellt werden.

Der Einstich kann dabei konisch oder mit anderer Form versehen werden. Letztlich ist entscheidend, dass die Nuteinsätze in einfacher Art und Weise in die Nut 5 eingesetzt, in der Nut 5 verschiebbar angeordnet und dort einfach fixierbar sind.

Durch Einbringen von geraden Bauteilen - also nicht der Krümmung der Nut in Umfangrichtung angepassten Elementen - in eine kreisrunde Nut kann zusätzlich ein Formschluss ermöglicht werden. Dabei bewirkt eine 4- oder 3-Punkt-Klemmung ein zusätzliches Verkrallen dieser Wuchtgewichte bzw. Nuteinsätze in der Nut 5.

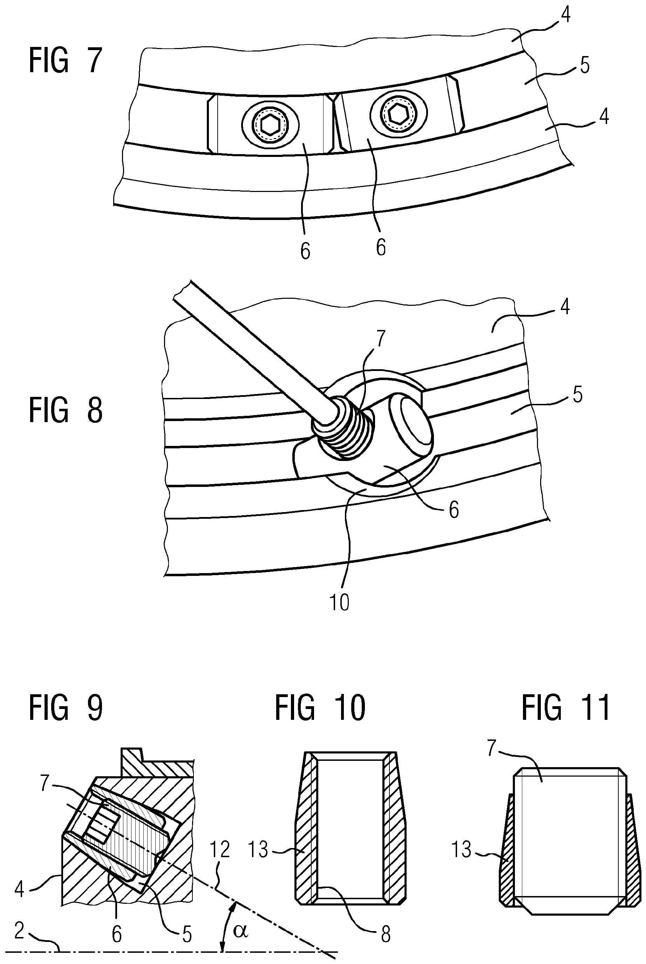

FIG 7 zeigt an einer Stirnseite 4 des Rotors 1 eine umlaufende Nut 5, in der zwei Quergewindebolzen 6 angeordnet sind, die ein Feinwuchten ermöglichen. Damit wird in einfacher Art und Weise ein stufenloses Wuchten des Rotors ermöglicht.

FIG 8 zeigt das Einsetzen eines Quergewindebolzens 6 in eine Öffnung der Nut 5 über das Nutfenster 10 mithilfe eines, insbesondere vormagnetisierten Steckschlüssels 11. Dabei wird ein Gewindestift 7 ein oder zwei Gewindegänge in das Gewinde 8 des Quergewindebolzens 6 eingedreht. Damit ist nun der Quergewindebolzen 6 über das Nutfenster 10 leicht einsetzbar. Der Gewindestift hat aber den Quergewindebolzen 6 noch nicht aufgeweitet, so dass ein Verschieben des Quergewindebolzens 6 in der Nut 5 möglich ist. Um nunmehr auch an dieser Stelle der Öffnung eine Wuchtgewicht platzieren zu können, ist es vorteilhaft, wenn zumindest an einer Stirnseite des Rotors 1 zumindest zwei umlaufende Nuten vorgesehen sind, wobei die Nutfenster 10 an unterschiedlichen Positionen platziert sind.

Bei separaten Scheiben an den Stirnseiten des Rotors 1 kann die oben beschriebene Konstellation vermieden werden, indem die Scheibe bzw. das Endblech mit seiner Nut 5 auf der Welle 3 verdreht wird und somit das Nutfenster 10 eine andere Position einnimmt. Dabei wird aber nur die Scheibe gedreht, der andere überwiegende Teil des Rotors 1 verbleibt in seiner ursprünglichen Position.

FIG 9 zeigt in einem Teillängsschnitt des Rotors 1 den Einsatz einer Konusmutter 13 in der Nut 5. Die Ausrichtung 12 der Nut 5 bzw. des Einstichs ist auch hier unter einem vorgegebenen Winkel α zur Drehachse 2 durchgeführt, um den Wuchtvorgang, insbesondere das Einsetzen der Nuteinsätze zu vereinfachen.

FIG 10 zeigt einen Längsschnitt der Konusmutter 13 mit einem Gewinde 8, wobei FIG 11 einen eingesetzten Gewindestift 7 in die Konusmutter 13 zeigt.

Erfindungsgemäß kann nunmehr durch einfache Normteile eine positionsgenaue Wuchtung eines Rotors 1 vorgenommen werden, die keine speziellen Tariergewichte, Wuchtkitt etc. notwendig macht. Vielmehr werden erfindungsgemäß mit einfachen preiswerten Normteilen und einer einfachen und kostengünstigen hergestellten Nut 5 Wuchtmöglichkeiten an der Stirnseite eines Rotors 1 eröffnet.

Das erfindungsgemäße Wuchten eignet sich auch für andere rotationssymmetrische Teile wie Antriebs- oder Abtriebswellen, die durch Einsetzen von Nuteinsätzen in umlaufende Nuten dieser Teile gewuchtet bzw. austariert werden können.

## Patentansprüche

1. Rotor (1) einer rotatorischen dynamoelektrischen Maschine, der zumindest an einer Stirnseite (4) zumindest eine umlaufende in ihrem Querschnitt nach außen verjüngende Nut (5) aufweist, in die über ein Nutfenster (10) eine oder mehrere Nuteinsätze einsetzbar und positionierbar sind, wobei die Nuteinsätze als Quergewindebolzen (6) ausgeführt sind, wobei an zumindest einer Stirnseite des Rotors (1) zumindest zwei umlaufende Nuten vorgesehen sind,
**dadurch gekennzeichnet, dass** die Nutfenster an unterschiedlichen Positionen platziert sind.

2. Rotor (1) nach Anspruch 1, **dadurch gekennzeichnet, dass** die Nut (5) konisch ausgeführt ist.

3. Rotor (1) nach einem der Ansprüche 1 oder 2, **dadurch gekennzeichnet, dass** der Nuteinsatz durch Einschrauben bzw. Anziehen eines Gewindestiftes (7) in diesen Nuteinsatz positionierbar ist.

4. Rotor (1) nach einem der vorhergehenden Ansprüche, **dadurch gekennzeichnet, dass** die Nut (5) eine Ausrichtung (12) unter einem vorgegebenen Winkel (alpha) zur Achse (2) aufweist.

5. Dynamoelektrische Maschine, mit einem Rotor (1) nach einem der oben genannten Ansprüche, **dadurch gekennzeichnet, dass** zumindest der eine Nuteinsatz in der nach außen verjüngenden Nut(5) so positionierbar ist, dass Unwuchten des Rotors (1) im Betrieb der dynamoelektrischen Maschine kompensiert bzw. reduziert sind.

6. Verfahren zur Tarierung/Wuchtung des Rotors (1) einer dynamoelektrischen rotatorischen Maschine nach Anspruch 5 durch folgende Schritte:
- Betrieb der dynamoelektrischen Maschine nach Anspruch 5,
- Erfassen der Unwucht bzw. der Unwuchten des Rotors (1),
- Festlegen der Art, Menge und Gewicht des Nuteinsatzes,
- Einsetzen des Nuteinsatzes in der nach außen verjüngenden Nut (5) an zumindest einer Stirnseite (4) des Rotors (1),
- Fixierung des Nuteinsatzes in der Nut (5) insbesondere durch einen Gewindestift (7).

## Claims

1. Rotor (1) of a rotary dynamo-electric machine, which, at least on a front face (4), has at least one groove (5) which tapers peripherally outward in its cross-section, into which one or more groove inserts can be inserted and positioned by way of a groove window (10), wherein the groove inserts are embodied as transverse threaded bolts (6), wherein at least two peripheral grooves are provided on at least one front face of the rotor (1),
**characterised in that** the groove windows are placed at different positions.

2. Rotor (1) according to claim 1, **characterised in that** the groove (5) is embodied to be conical.

3. Rotor (1) according to one of claims 1 or 2, **characterised in that** the groove insert can be positioned into this groove insert by screwing in or tightening a threaded pin (7) .

4. Rotor (1) according to one of the preceding claims, **characterised in that** the groove (5) has an alignment (12) at a predetermined angle (alpha) in relation to the axis (2).

5. Dynamo-electric machine, with a rotor (1) according to one of the afore-cited claims, **characterised in that** at least the one groove insert can be positioned in the outwardly tapering groove (5) so that imbalances of the rotor (1) during operation of the dynamoelectric machine are compensated or reduced.

6. Method for taring/balancing the rotor (1) of a dynamo-electric rotary machine according to claim 5 by means of the following steps:
- operation of the dynamo-electric machine according to claim 5,
- detecting the imbalance or imbalances of the rotor (1),
- defining the type, quantity and weight of the groove insert,
- inserting the groove insert into the outwardly tapering groove (5) on at least one front face (4) of the rotor (1),
- fixing the groove insert in the groove (5), in particular by means of a threaded pin (7).

## Revendications

1. Rotor (1) d'une machine tournante dynamoélectrique, qui a au moins sur un côté (4) frontal au moins une encoche (5) faisant le tour, se rétrécissant vers l'extérieur dans sa section transversale, dans laquelle par une fenêtre (10) d'encoche un insert ou plusieurs inserts d'encoche peuvent être insérés et mis en positions, dans lequel les inserts d'encoche sont réalisés sous la forme de vis (6) sans tête transversales, dans lequel sur au moins un côté frontal du rotor (1) sont prévues au moins deux encoches faisant le tour,
**caractérisé en ce que** les fenêtres d'encoche sont placées en des positions différentes.

2. Rotor (1) suivant la revendication 1, **caractérisé en ce que** l'encoche (5) est conique.

3. Rotor (1) suivant la revendication 1 ou 2, **caractérisé en ce que** l'insert d'encoche peut être mis en position par vissage ou serrage d'une vis (7) sans tête dans cet insert d'encoche.

4. Rotor (1) suivant l'une des revendications précédentes, **caractérisé en ce que** l'encoche (5) a une orientation (12) suivant un angle (alpha) donné à l'avance par rapport à l'axe (2).

5. Machine dynamoélectrique, comprenant un rotor (1) suivant l'une des revendications mentionnées ci-dessus, **caractérisée en ce qu'**au moins le un insert d'encoche peut être mis en position dans l'encoche (5) se rétrécissant vers l'extérieur, de manière à compenser ou à réduire des balourds du rotor (1) lorsque la machine dynamoélectrique est en fonctionnement.

6. Procédé de tarage / d'équilibrage du rotor (1) d'une machine dynamoélectrique tournante suivant la revendication 5 par les stades suivants :
- Fonctionnement de la machine électrodynamique selon la revendication 5,
- détection du balourd ou des balourds du rotor (1),
- fixation du type, de la quantité et du poids de l'insert d'encoche,
- insertion de l'insert d'encoche dans l'encoche (5) se rétrécissant vers l'extérieur au moins un côté (4) frontal du rotor (1),
- immobilisation de l'insert d'encoche dans l'encoche, notamment par une vis (7) sans tête.
